# EUROPÄISCHE PATENTSCHRIFT

(11) **EP 3 584 464 B1**
(45) Veröffentlichungstag und Bekanntmachung des Hinweises auf die Patenterteilung: **17.03.2021**
(21) Anmeldenummer: 19179850.3
(22) Anmeldetag: 13.06.2019
(51) Int. Cl.: F16F 9/44, F16F 9/46, B62K 25/28, F16F 9/18, F16F 9/512, F16F 9/516

(54) **SCHWINGUNGSDÄMPFER**
SCHOCK ABSORBER
AMORTISSEUR

(30) Priorität: 19.06.2018 DE 102018114679
(43) Veröffentlichungstag der Anmeldung: 25.12.2019
(73) Patentinhaber: KTM AG, 5230 Mattighofen (AT)
(72) Erfinder: Pegoraro, Roberto, 5211 Friedburg (AT)
(74) Vertreter: Söllner, Udo

(56) Entgegenhaltungen:
- WO-A1-2011/080795
- JP-A- 2003 172 394
- JP-A- 2008 240 839
- JP-U- S59 172 688

## Beschreibung

Die vorliegende Erfindung betrifft einen Schwingungsdämpfer mit einem zur Aufnahme von Dämpfungsfluid ausgebildeten Zylinder und einem darin axial beweglichen Arbeitskolben, nach dem Oberbegriff des Anspruchs 1.

Ein gattungsgemäßer Schwingungsdämpfer kann zur Bedämpfung von Federbewegungen an Fahrzeugen, beispielsweise Motorrädern eingesetzt werden.

Anhand der DE 10 2004 014 458 B4 ist eine Vorderradgabel für ein Motorrad bekannt geworden, bei der als Stoßdämpfungseinrichtung ein Doppelstangen-Stoßdämpfer eingesetzt wird. Dieser weist einen Arbeitszylinder mit einem Arbeitskolben auf, der den Innenraum des Arbeitszylinders in zwei Arbeitsräume unterteilt.

Anhand der DE 10 2006 052 228 B4 ist eine ähnliche Vorderradgabel bekannt geworden, die ebenfalls einen Doppelstangen-Stoßdämpfer benutzt.

Anhand der EP 2 110 300 B1 ist ebenfalls eine Vorderradgabel für ein Motorrad bekannt geworden, bei der ein Doppelstangen-Stoßdämpfer als Dämpfungseinrichtung verwendet wird.

Anhand der US 8,276,719 B2 ist ein Dämpfer für ein Fahrrad bekannt geworden, bei dem der Arbeitskolben an einer Kolbenstange angeordnet ist, welche innen hohl ausgebildet ist. Im Inneren der Kolbenstange ist eine Einstellstange mit einer Einstellnadel angeordnet, mit der die Strömung von Dämpfungsfluid von der Kompressionskammer in die Reboundkammer sowohl für die Druckbewegung als auch für die Zugbewegung eingestellt werden kann. Damit kann die Dämpfung sowohl für die Einfederbewegung als auch für die Ausfederbewegung eingestellt werden, aber nicht unabhängig voneinander.

Anhand der EP 1 473 483 B1 ist ein hydraulischer Stoßdämpfer bekannt geworden, der eine Kolbenstange aufweist, die innen hohl ausgebildet ist und in der ein Stellrohr und eine Stellstange angeordnet sind, mit denen zwei Stellelemente betätigt werden können.

Anhand der DE 41 03 356 C1 ist ein hydraulisch dämpfender Schwingungsdämpfer bekannt geworden, der eine innen hohl ausgebildete Kolbenstange aufweist mit einer darin axial verschiebbaren Steuerstange. Mit der Steuerstange können Bohrungen abgedeckt oder freigegeben werden, wodurch eine Veränderung der Dämpfungscharakteristik des Schwingungsdämpfers möglich ist.

Anhand der US 8,235,187 B2 ist ein hydraulischer Stoßdämpfer bekannt geworden, der ebenfalls eine hohle Kolbenstange aufweist, in der eine Stellstange angeordnet ist, an der sich eine Einstellnadel angeordnet befindet. Über eine Längsverschiebung der Einstellnadel kann die Dämpfungscharakteristik des Dämpfers bei der Reboundbewegung eingestellt werden. Die Verschiebung der Einstellnadel dient auch der Anpassung der Dämpfungscharakteristik bei der Einfederbewegung.

Schließlich ist anhand der DE 10 2014 112 523 A1 ein Schwingungsdämpfer mit unabhängig voneinander einstellbarer Dämpfung für die Zugstufe und die Druckstufe bekannt geworden.

Ein weiterer bekannter Schwingungsdämpfer weist einen Zylinder auf, in welchem ein darin axial beweglicher Arbeitskolben vorgesehen ist, der an einer mit einem Axialdurchlass ausgebildeten Kolbenstange geführt angeordnet ist und den Zylinderinnenraum in einen ersten Arbeitsraum für die Bedämpfung der Einfederbewegung oder Kompressionsbewegung und einen zweiten Arbeitsraum für die Bedämpfung der Ausfederbewegung oder Reboundbewegung unterteilt.

Die Kolbenstange des Schwingungsdämpfers weist einen Fluidkommunikationsdurchlass für die Strömung des Arbeitsfluids in der Form des Dämpfungsfluids auf, die sich bei der Ausfederbewegung des Schwingungsdämpfers einstellt, wenn der Arbeitskolben in Richtung des zweiten Arbeitsraums für die Zugstufe oder Ausfederbewegung verlagert wird und dadurch der Druck des Arbeitsfluid im zweiten Arbeitsraum ansteigt und über Dämpfungseinrichtungen bedämpft das Arbeitsfluid in Richtung des für die Druckstufe oder Einfederbewegung vorgesehenen ersten Arbeitsraums entspannt wird.

Bei der Einfederbewegung des bekannten Stoßdämpfers oder Schwingungsdämpfers steigt aufgrund der Bewegung des Arbeitskolbens in Richtung nach oben der Arbeitsdruck im ersten Arbeitsraum an und das Arbeitsfluid wird in Richtung zu einer Ausgleichskammer entspannt. Dabei wird das Arbeitsfluid über einstellbare Dämpfungseinrichtungen geführt und auf diese Weise Dämpfungsarbeit verrichtet.

Wenn der bekannte Schwingungsdämpfer beispielsweise am Hinterrad eines Motorrads in der Form beispielsweise eines Geländesportmotorrads angeordnet wird, werden mit dem Schwingungsdämpfer Einfederbewegungen und Ausfederbewegungen bedämpft.

Die Geschwindigkeit, mit der der Arbeitskolben im Zylinder bewegt wird, hängt dabei unter anderem von der Oberfläche ab, auf der das Motorrad bewegt wird. Bei einer Fahrt des Motorrads über eine Oberfläche, die starke Unebenheiten aufweist in der Form von Wellen oder Absätzen ist die Geschwindigkeit, mit der der Arbeitskolben im Zylinder verlagert wird, wesentlich höher als bei der Fahrt des Motorrads über eine Oberfläche, die nur sanfte und wenig ausgeprägte Unebenheiten aufweist.

Wird bei einer hohen Verlagerungsgeschwindigkeit des Arbeitskolbens von der Druckstufe eines Schwingungsdämpfers eine hohe Dämpfungsarbeit geleistet, so sorgt dies für eine stoßartige Belastung des Hinterrads, da die hohe Dämpfungsarbeit einer raschen Verlagerung des Arbeitskolbens entgegenwirkt und das Hinterrad somit den Fahrbahnunebenheiten nicht folgen kann.

Zur Vermeidung dieses Problems ist es bereits bekannt geworden, einen Schwingungsdämpfer mit einer ersten Verstelleinrichtung zur Einstellung der Druckstufendämpfung vorzusehen, der zwei zur Veränderung von Durchströmungsöffnungen für die Druckstufe einstellbare Ventileinrichtungen besitzt, die unabhängig voneinander eingestellt werden können und wodurch erreicht wird, dass bei einer hohen Verlagerungsgeschwindigkeit des Arbeitskolbens die Ventileinrichtung für die Verlagerung des Arbeitsfluids mit hoher Strömungsgeschwindigkeit aus dem ersten Arbeitsraum in Richtung der Ausgleichskammer verschoben werden kann und bei niedrigeren Verlagerungsgeschwindigkeiten des Arbeitskolbens das Arbeitsfluid mit niedriger Strömungsgeschwindigkeit in Richtung der Ausgleichskammer verschoben werden kann.

Eine hohe Verlagerungsgeschwindigkeit des Arbeitskolbens sorgt für einen sprunghaften Druckanstieg im ersten Arbeitsraum, während eine niedrigere Verlagerungsgeschwindigkeit des Arbeitskolbens für einen langsameren Druckanstieg im ersten Arbeitsraum sorgt, der auch nicht so hoch ansteigt, dass die Ventileinrichtung für den hohen Massendurchsatz (high flow valve) an Arbeitsfluids in Richtung zur Ausgleichskammer öffnet, da der geringere Massendurchsatz an Arbeitsfluids über die Ventileinrichtung für den niedrigen Massendurchsatz (low flow valve) an Arbeitsfluids in Richtung zur Ausgleichskammer entspannt werden kann.

Der bekannte Schwingungsdämpfer weist auch eine zweite Verstelleinrichtung zur Einstellung der Zugstufendämpfung für die Bedämpfung der Ausfederbewegung auf, mit der eine im Axialdurchlass der Kolbenstange verschiebbar angeordnete Stellstange zur Veränderung einer Durchströmungsöffnung einer Ventileinrichtung für die Zugstufe verlagert werden kann und auf diese Weise die Durchströmungsöffnung vergrößert oder verkleinert werden kann, wodurch die Dämpfungsarbeit verkleinert oder vergrößert wird.

Obwohl sich dieser bekannte Schwingungsdämpfer in der Praxis bereits bestens bewährt hat, besitzt er trotzdem Potenzial für Verbesserungen, da auch bei der Ausfederbewegung die Verlagerungsgeschwindigkeit des Arbeitskolbens in Abhängigkeit von der Oberflächenstruktur der Fahrbahn, auf der das mit dem bekannten Schwingungsdämpfer ausgerüstete Fahrzeug in der Form beispielsweise eines Motorrads bewegt wird, starken Schwankungen unterliegt.

Anhand der JP 2003 172394 A ist ein Schwingungsdämpfer nach dem Oberbegriff des Anspruchs 1 bekannt geworden.

Ausgehend hiervon liegt der vorliegenden Erfindung zur Vermeidung der geschilderten Probleme die Aufgabe zugrunde, den Schwingungsdämpfer zur Verbesserung seines Ansprechverhaltens auf unterschiedliche Fahrbahnoberflächen hin weiterzubilden.

Die Erfindung weist zur Lösung dieser Aufgabe die im Anspruch 1 angegebenen Merkmale auf. Vorteilhafte Ausgestaltungen hiervon sind in den weiteren Ansprüchen beschrieben.

Die Erfindung schafft einen Schwingungsdämpfer mit einem zur Aufnahme von Dämpfungsfluid ausgebildeten Zylinder und einem darin axial beweglichen Arbeitskolben, der an einer mit einem Axialdurchlass ausgebildeten Kolbenstange geführt angeordnet ist und den Zylinderinnenraum in einen ersten und einen zweiten Arbeitsraum unterteilt und der Schwingungsdämpfer einen die Kolbenstange zumindest abschnittsweise axial durchsetzenden Fluidkommunikationsdurchlass für eine Fluidströmung zumindest vom zweiten Arbeitsraum zum ersten Arbeitsraum aufweist und eine erste Verstelleinrichtung zur Einstellung der Druckstufendämpfung sowie eine zweite Verstelleinrichtung zur Einstellung der Zugstufendämpfung aufweist und die erste Verstelleinrichtung zwei zur Veränderung von Durchströmungsöffnungen für die Druckstufe einstellbare Ventileinrichtungen besitzt und die zweite Verstelleinrichtung eine im Axialdurchlass der Kolbenstange verschiebbar angeordnete Stellstange zur Veränderung einer ersten Durchströmungsöffnung einer dritten Ventileinrichtung für die Zugstufe besitzt, wobei die zweite Verstelleinrichtung eine von der dritten Ventileinrichtung getrennt einstellbare vierte Ventileinrichtung mit einer Einstellnadel aufweist, die zur Axialverlagerung ausgebildet und zur Veränderung einer zweiten Durchströmungsöffnung für die Zugstufe vorgesehen ist , wobei die Axialverlagerung der Einstellnadel die zweite Durchströmungsöffnung für Dämpfungsfluid vom zweiten Arbeitsraum zum ersten Arbeitsraum in Abhängigkeit vom Betrag der Axialverlagerung der Einstellnadel veränderbar freigibt, und die Einstellnadel eine vom Druck des Dämpfungsfluids in dem zweiten Arbeitsraum beaufschlagte Differenzfläche aufweist derart, dass der Druck die Einstellnadel zur Axialverlagerung der Einstellnadel in Öffnungsrichtung der zweiten Durchströmungsöffnung beaufschlagt.

Die Erfindung schafft also einen Schwingungsdämpfer, der eine Verstelleinrichtung für die Zugstufendämpfung besitzt und diese Verstelleinrichtung zwei unabhängig voneinander einstellbare Durchströmungsöffnungen für die Strömung des Arbeitsfluids bei der Ausfederbewegung des Schwingungsdämpfers besitzt, sodass dadurch die Möglichkeit geschaffen wird, unterschiedlichen Verlagerungsgeschwindigkeiten des Arbeitskolbens bei der Ausfederbewegung Rechnung zu tragen.

Liegt eine niedrige Verlagerungsgeschwindigkeit des Arbeitskolbens vor, kommt es in dem zweiten Arbeitsraum zu einem Druckanstieg mit niedriger Geschwindigkeit und das Arbeitsfluid kann durch die erste Durchströmungsöffnung der dritten Ventileinrichtung für die Zugstufe in Richtung zum ersten Arbeitsraum entspannt werden.

Kommt es dagegen zu einer hohen Verlagerungsgeschwindigkeit des Arbeitskolbens bei der Ausfederbewegung des Schwingungsdämpfers, was beispielsweise bei der Fahrt des Fahrzeugs über Bodenwellen mit hoher Amplitude stattfindet, da das mit dem Schwingungsdämpfer bedämpfte Fahrzeugrad den Bodenwellen zu folgen versucht, so würde die hohe Dämpfungsarbeit bei der Durchströmung des Arbeitsfluids durch die erste Durchströmungsöffnung der dritten Ventileinrichtung dazu führen, dass das Fahrzeugrad den Bodenwellen nicht folgen kann, also Kontakt mit der Fahrbahnoberfläche verliert und somit ohne Bodenkontakt keine Vortriebskraft übertragen kann.

Hier schafft die Erfindung Abhilfe. Die durch eine am Schwingungsdämpfer oder getrennt davon vorgesehene Hauptfeder erzeugt in dem betrachteten Augenblick, in welchem das Fahrzeugrad keinen Bodenkontakt hat, eine hohe Rückstellkraft in Richtung der Ausfederbewegung, der keine oder nur eine geringe Gegenkraft in der Form der Radaufstandskraft entgegenwirkt und es kommt somit zu einer hohen Verlagerungsgeschwindigkeit des Arbeitskolbens mit einem schnellen Druckaufbau im zweiten Arbeitsraum. Dieser rasche und zu einem hohen Druck im zweiten Arbeitsraum führende Druckaufbau öffnet die zweite Durchströmungsöffnung für die Zugstufe der getrennt einstellbaren vierten Ventileinrichtung. Das Öffnungsverhalten dieser zweiten Durchströmungsöffnung kann über die Einstellnadel der vierten Ventileinrichtung verändert werden, ohne dass es hierzu notwendig ist, innere Eingriffe am erfindungsgemäßen Schwingungsdämpfer vorzunehmen, also beispielsweise ein Austauschen von Federscheibenpaketen für die Zugstufe vornehmen zu müssen, wie dies beim bekannten Schwingungsdämpfer der Fall ist.

Auf diese Weise kann der Benutzer des erfindungsgemäßen Schwingungsdämpfers über die einstellbare vierte Ventileinrichtung das Ansprechverhalten des Schwingungsdämpfers auf hohe Verlagerungsgeschwindigkeiten des Arbeitskolbens mittels der Einstellnadel wunschgemäß anpassen oder verändern und somit nicht nur eine Verbesserung des Fahrkomforts erreichen, sondern auch damit erreichen, dass die Zeitphasen, in denen das Fahrzeugrad keinen Vortriebskraft übertragenden Bodenkontakt hat, verkürzen und somit beispielsweise bei der Fahrt über Bodenwellen oder Bodenunebenheiten in einem betrachteten Zeitintervall die Phasen ohne die Übertragung von Vortriebskraft verkürzen und hierdurch einen Vorteil erreichen, da solche Zeitphasen ohne die Übertragung von Vortriebskraft auch nicht zur Fahrzeugbeschleunigung genutzt werden können und es bei Zeitphasen ohne Bodenkontakt auch nicht zur Aufrechterhaltung von Kontrolle über das Fahrzeug kommt, die über den Kontakt des Fahrzeugrads mit der Fahrbahnoberfläche ausgeübt wird.

Es ist erfindungsgemäß vorgesehen, dass die Einstellnadel zur Axialverlagerung ausgebildet ist und die Axialverlagerung die zweite Durchströmungsöffnung für Dämpfungsfluid vom zweiten Arbeitsraum zum ersten Arbeitsraum in Abhängigkeit vom Betrag der Axialverlagerung der Einstellnadel veränderbar freigibt. Damit wird eine Konfiguration geschaffen, nach der die zweite Durchströmungsöffnung vollständig geschlossen werden kann, vollständig geöffnet werden kann oder auch teilweise geöffnet werden kann. Über den Betrag der Öffnung der zweiten Durchströmungsöffnung und eine Veränderung des Betrags der Öffnung der zweiten Durchströmungsöffnung kann das Ansprechverhalten des erfindungsgemäßen Schwingungsdämpfers für den Ausfederfall angepasst werden, also das Ansprechverhalten bei der Reboundbewegung den Wünschen des Benutzers entsprechend angepasst werden.

Es ist erfindungsgemäß auch vorgesehen, dass die Einstellnadel eine vom Druck des Dämpfungsfluids in dem zweiten Arbeitsraum beaufschlagte Differenzfläche aufweist derart, dass der Druck die Einstellnadel in Öffnungsrichtung der zweiten Durchströmungsöffnung beaufschlagt.

Damit wird erreicht, dass über die Druckbeaufschlagung der Differenzfläche eine Kraftkomponente auf die Einstellnadel erzeugt wird, sodass diese Kraftkomponente zu einer Verlagerungsbewegung der Einstellnadel führt und diese Verlagerungsbewegung die zweite Durchströmungsöffnung weiter freigibt und somit die beim Durchströmen des Arbeitsfluids durch die zweite Durchströmungsöffnung verrichtete Dämpfungsarbeit abnimmt und die von der Hauptfeder ausgeübte Rückstellkraft zu einer raschen Ausfederbewegung des Fahrzeugrads führt und somit das Fahrzeugrad rasch wieder Kontakt mit der Fahrbahnoberfläche erfährt.

Es ist nach einer Weiterbildung der Erfindung auch vorgesehen, dass die Einstellnadel ein hohlzylindrisch ausgebildeter Hülsenkörper ist, der eine Innenausnehmung zur Aufnahme der Stellstange oder einer Einstellnadel aufweist und sich mit einer den Hülsenkörper in Schließstellung der zweiten Durchströmungsöffnung beaufschlagenden Federeinrichtung in Kontakt befindet.

Damit wird erreicht, dass durch die Möglichkeit der Integration der Stellstange in den Hülsenkörper eine kompakte Ausbildung des erfindungsgemäßen Schwingungsdämpfers erreicht wird und über die Beaufschlagung des Hülsenkörpers mit der Federeinrichtung in Schließstellung der zweiten Durchströmungsöffnung eine vorgespannte Stellung des Hülsenkörpers erreicht wird, der einer Öffnungsbewegung des Hülsenkörpers entgegenwirkt und erst nach dem Überschreiten eines vorbestimmten Arbeitsdrucks im zweiten Arbeitsraum eine Öffnung oder weitere Öffnung der zweiten Durchströmungsöffnung herbeigeführt wird.

Über die Beaufschlagung des Hülsenkörpers mit einer über die Federeinrichtung einstellbaren Vorspannkraft kann somit das Ansprechverhalten des erfindungsgemäßen Schwingungsdämpfers verändert werden, ohne dass es notwendig ist, den erfindungsgemäßen Schwingungsdämpfer beispielsweise zum Einbau eines modifizierten Federscheibenpakets öffnen zu müssen. Eine niedrigere Vorspannkraft führt beispielsweise zu einem Öffnen der zweiten Durchströmungsöffnung bei einem niedrigeren Druckniveau im zweiten Arbeitsraum und daher bereits bei einer weniger hohen Verlagerungsgeschwindigkeit des Arbeitskolbens, während eine höhere Vorspannkraft das Öffnen oder weitere Öffnen der zweiten Durchströmungsöffnung erst bei einer höheren Verlagerungsgeschwindigkeit des Arbeitskolbens bewirkt. Damit kann der Grad der Öffnung der zweiten Durchströmungsöffnung und/oder der Beginn der Öffnung der zweiten Durchströmungsöffnung frei eingestellt werden.

Es ist nach einer Weiterbildung der Erfindung vorgesehen, dass die Einstellnadel an einem mit einer Leichtlaufbuchse versehenen Bereich des Axialdurchlasses der Kolbenstange angeordnet ist und am Außenumfang und am Innenumfang der Einstellnadel jeweils eine Dichtungseinrichtung angeordnet ist.

Über die Aufnahme der Einstellnadel in die Leichtlaufbuchse, so dass die Einstellnadel entlang der Innenumfangsfläche der Leichtlaufbuchse verlagert werden kann, wird erreicht, dass die Einstellnadel auf eine Druckerhöhung im zweiten Arbeitsraum über das mittels der Vorspannung der Federeinrichtung voreingestellte Druckniveau mit einer Verlagerungsbewegung in Richtung zur Öffnung der zweiten Durchströmungsöffnung reagiert, ohne dass ein hohes Losbrechmoment für die Bewegung der Einstellnadel überwunden werden müsste.

Die Anordnung der jeweiligen Dichtungseinrichtung am Innenumfang und am Außenumfang der Einstellnadel sorgt dafür, dass der im zweiten Arbeitsraum herrschende Arbeitsdruck des Dämpfungsfluids nicht unkontrolliert entlang der Kolbenstange des Schwingungsdämpfers entweichen kann.

Es ist nach einer Weiterbildung der Erfindung auch vorgesehen, dass die Einstellnadel mit einem sich vom Außenumfang in Richtung zum Innenumfang verlaufenden Durchlass für Dämpfungsfluid versehen ist. Auf diese Weise wird es erreicht, dass das im zweiten Arbeitsraum befindliche Dämpfungsfluid über den Durchlass in den Innenraum der Einstellnadel gelangen kann und von dort über den Fluidkommunikationsdurchlass in Richtung zum ersten Arbeitsraum strömen kann, sodass eine Fluidströmung und damit die Verrichtung von Dämpfungsarbeit über diese Fluidströmung möglich ist.

Es ist nach einer Weiterbildung der Erfindung auch vorgesehen, dass der Schwingungsdämpfer eine in dem Axialdurchlass der Kolbenstange angeordnete, hohlzylindrisch ausgebildete Stellstange aufweist, die mittels eines mit der Stellstange in Wirkeingriff bringbaren Stellelements zur Veränderung der zweiten Durchströmungsöffnung für die Zugstufe axial verlagerbar ausgebildet ist.

Es bedeutet dies mit anderen Worten, dass über das von außen am Schwingungsdämpfer zugängliche Stellelement die Stellstange axial verlagert werden kann, die beispielsweise über die vorgenannte Federeinrichtung die Einstellnadel vorspannen und/oder verlagern kann, sodass der Öffnungsgrad der zweiten Durchströmungsöffnung über das außen am Schwingungsdämpfer angeordnete Stellelement verändert werden kann. Dies wiederum sorgt dafür, dass das Ansprechverhalten des erfindungsgemäßen Schwingungsdämpfers auf unterschiedliche Verlagerungsgeschwindigkeiten des Arbeitskolbens bei der Reboundbewegung eingestellt beziehungsweise verändert werden kann.

Es ist nach einer Weiterbildung der Erfindung auch vorgesehen, dass die zweite Verstelleinrichtung eine relativ zur Kolbenstange axial verlagerbare, zylinderförmig ausgebildete Einstellnadel aufweist, deren Axialverlagerung die erste Durchströmungsöffnung für Dämpfungsfluid vom zweiten Arbeitsraum zum ersten Arbeitsraum in Abhängigkeit von dem Betrag der Axialverlagerung der Einstellnadel veränderbar freigibt.

Über eine Axialverlagerung der Einstellnadel kann daher der Grad der Öffnung der ersten Durchströmungsöffnung für den Durchtritt von Arbeitsfluid vom zweiten Arbeitsraum in den ersten Arbeitsraum verändert werden und so die beim Durchtritt des Arbeitsfluids durch die erste Durchströmungsöffnung verrichtete Dämpfungsarbeit beeinflusst werden. Mit der Veränderung der Dämpfungsarbeit kann das Ansprechverhalten des erfindungsgemäßen Schwingungsdämpfers auf eine niedrige Verlagerungsgeschwindigkeit des Arbeitskolbens bei der Ausfederbewegung beeinflusst werden.

Es ist nach einer Weiterbildung der Erfindung auch vorgesehen, dass die zur Veränderung der ersten Durchströmungsöffnung vorgesehene Einstellnadel mit der vorstehend bereits erwähnten Stellstange in Anlage bringbar ausgebildet ist und mittels einer Axialverlagerung der Stellstange die erste Durchströmungsöffnung veränderbar freigebbar ist.

Damit wird erreicht, dass über eine Axialverlagerung der Stellstange die Einstellnadel axial verlagert werden kann und somit der Grad der Öffnung der ersten Durchströmungsöffnung verändert werden kann.

Es ist nach einer Weiterbildung der Erfindung auch vorgesehen, dass die zur Veränderung der ersten Durchströmungsöffnung vorgesehene Einstellnadel an einem stirnseitigen Endabschnitt eine V-förmig ausgebildete Ausnehmung aufweist und sich der stirnseitige Endabschnitt in eine komplementär zur Konfiguration des Endabschnitts ausgebildete Ausnehmung eines rohrstückförmig ausgebildeten Hülsenkörpers erstreckt und sich der Endabschnitt an der Innenwand der Ausnehmung abstützt.

Die V-förmige Konfiguration des Endabschnitts der Einstellnadel sorgt dafür, dass über eine Axialverlagerung des Endabschnitts, der sich in der Ausnehmung des Hülsenkörpers angeordnet befindet, der vom Hülsenkörper freigegebene Bereich der V-förmigen Ausnehmung oder Nut über eine Axialverlagerung der Einstellnadel verändert werden kann und somit die für den Durchtritt von Dämpfungsfluid über die V-förmige Ausnehmung freigegebene Durchtrittsfläche verändert werden kann. Der Endabschnitt der Einstellnadel verbleibt entlang des Verlagerungswegs der Einstellnadel in der Ausnehmung des rohrstückförmig ausgebildeten Hülsenkörpers, sodass durch den Endabschnitt eine Axialführung der Einstellnadel erreicht wird und es auch bei hohen Strömungsgeschwindigkeiten des die Einstellnadel passierenden Dämpfungsfluids und turbulenten Strömungsverhältnissen nicht zu einer Schwingungsanregung der Einstellnadel kommt und somit eine durch eine etwaige Schwingungsanregung der Einstellnadel andernfalls stattfindende Bewegung der Einstellnadel in radialer Richtung innerhalb des Axialdurchlasses des die Einstellnadel aufnehmenden Hülsenkörpers, der für die Veränderung der zweiten Durchströmungsöffnung der zweiten Verstelleinrichtung vorgesehen ist, unterbleibt und somit ein durch solche Bewegungen andernfalls stattfindender Verschleiß ebenfalls unterbleibt.

Es ist nach einer Weiterbildung der Erfindung auch vorgesehen, dass der Schwingungsdämpfer ein Stellelement aufweist, welches mit der Stellstange zur Veränderung der ersten Durchströmungsöffnung für die Zugstufe in Wirkeingriff bringbar ist.

Damit wird es ermöglicht, dass durch das von außen am Schwingungsdämpfer zugängliche Stellelement auch der Grad der Öffnung der ersten Durchströmungsöffnung für die Ausfederbewegung des erfindungsgemäßen Schwingungsdämpfers verändert werden kann.

Es ist nach einer Weiterbildung der Erfindung auch vorgesehen, dass die Einstellnadel relativ zum Hülsenkörper der zweiten Durchströmungsöffnung derart angeordnet ist, dass eine Axialverlagerung der Einstellnadel mindestens einen Teilbereich der V-förmig ausgebildeten Ausnehmung zum Durchtritt von Dämpfungsfluid aus dem zweiten Arbeitsraum zum ersten Arbeitsraum freigibt.

Auch ist es nach einer Weiterbildung der Erfindung vorgesehen, dass die beiden Ventileinrichtungen der ersten Verstelleinrichtung zur Veränderung eines ersten, niedrigeren Massenstroms an Dämpfungsfluid und eines zweiten, höheren Massenstroms an Dämpfungsfluid aus dem ersten Arbeitsraum in Richtung zu einem Ausgleichsraum für die Aufnahme von Dämpfungsfluid ausgebildet sind.

Diese Konfiguration sorgt dafür, dass in Abhängigkeit vom Druck im ersten Arbeitsraum Dämpfungsfluid in der Form eines ersten, niedrigeren Massenstroms bei einer Verlagerungsbewegung des Arbeitskolbens bei der Einfederbewegung mit niedriger Verlagerungsgeschwindigkeit in Richtung zum Ausgleichsraum strömen kann und über die Ventileinrichtung dieser Massenstrom eingestellt werden kann und ein zweiter, höherer Massenstrom bei einer höheren Verlagerungsgeschwindigkeit des Arbeitskolbens in den Ausgleichsraum strömen kann und auch dieser Massenstrom über die Ventileinrichtung eingestellt werden kann. Damit wird eine Ventileinrichtung für einen niedrigen Massenstrom und eine Ventileinrichtung für einen hohen Massenstrom auch bei der Einfederbewegung des Arbeitskolbens geschaffen.

Es ist nach einer Weiterbildung der Erfindung auch vorgesehen, dass die Ventileinrichtung zur Veränderung des ersten Massenstroms eine relativ zu einer für den Durchtritt von Dämpfungsfluid in der Form des niedrigeren Massenstroms vorgesehene Bohrung verlagerbare Ventilnadel besitzt und die Ventileinrichtung zur Veränderung des zweiten Massenstroms eine von einer Federeinrichtung mit veränderbarer Vorspannung beaufschlagbare Federscheibenanordnung besitzt.

Diese Konfiguration sorgt dafür, dass über die verlagerbare Ventilnadel die Öffnung zum Durchtritt des niedrigeren Massenstroms vergrößert oder verkleinert werden kann und über die Ventileinrichtung zur Veränderung des zweiten Massenstroms mittels der Federeinrichtung eine Federscheibenanordnung veränderbar beaufschlagt wird, die vom Druck in dem ersten Arbeitsraum zum Durchlass des Arbeitsfluids zum Ausgleichsraum geöffnet werden muss.

Es ist nach einer Weiterbildung der Erfindung auch vorgesehen, dass der Arbeitskolben mit mindestens einem Durchlass zum Durchtritt von Dämpfungsfluid zwischen dem ersten und zweiten Arbeitsraum ausgebildet ist und mit Ventileinrichtungen insbesondere in der Form von Federscheiben zur wahlweisen Freigabe des Durchtritts von Dämpfungsfluid versehen ist.

Diese Konfiguration sorgt dafür, dass zur Verrichtung von Dämpfungsarbeit durch den Arbeitskolben Dämpfungsfluid zwischen den beiden Arbeitsräumen sowohl bei der Einfederbewegung als auch bei der Ausfederbewegung strömen kann.

Schließlich ist es nach einer Weiterbildung der Erfindung auch vorgesehen, dass der Schwingungsdämpfer eine Gasfeder zur Druckbeaufschlagung des Dämpfungsfluids besitzt, sodass durch die beispielsweise im Ausgleichsraum vorgesehene Gasfeder ein vorbestimmter Systemdruck im Schwingungsdämpfer aufrechterhalten werden kann und der Bildung von Kavitation vorgebeugt werden kann.

Die Erfindung wird im Folgenden anhand der Zeichnung näher erläutert. Diese zeigt in:
Fig. 1 eine teilweise Längsschnittdarstellung einer Ausführungsform eines Schwingungsdämpfers nach der vorliegenden Erfindung;
Fig. 2 eine vergrößerte Darstellung des Ausschnitts "A" nach Fig. 1 der Zeichnung;
Fig. 3 eine vergrößerte Darstellung des Ausschnitts "B" nach Fig. 1 der Zeichnung;
Fig. 4 eine Darstellung ähnlich derjenigen nach Fig. 3, die die Strömung von Dämpfungsfluid aus dem zweiten Arbeitsraum in den ersten Arbeitsraum bei niedriger Verlagerungsgeschwindigkeit des Arbeitskolbens zeigt;
Fig. 5 eine Darstellung ähnlich derjenigen nach Fig. 4, die den Strömungsverlauf in einer Übergangssituation zeigt, während der eine Strömung durch eine erste Durchströmungsöffnung und einer von einem Federscheibenpaket freigegebenen Strömungsbahn möglich ist;
Fig. 6 eine Darstellung ähnlich derjenigen nach Fig. 5, bei der auch eine Fluidströmung durch die zweite Durchströmungsöffnung hindurch möglich ist;
Fig. 7 eine Schnittdarstellung eines Ausschnitts ähnlich demjenigen nach dem Ausschnitt "B" nach Fig. 1 zur Erläuterung der Differenzfläche;
Fig. 8 eine Darstellung der an einer unteren Dämpferaufnahme angeordneten Kolbenstange;
Fig. 9 eine perspektivische Darstellung zur Erläuterung einer Einstellnadel zur Veränderung der ersten Durchströmungsöffnung; und
Fig. 10 eine perspektivische vergrößerte Darstellung des Ausschnitts "B" nach Fig. 1 der Zeichnung.

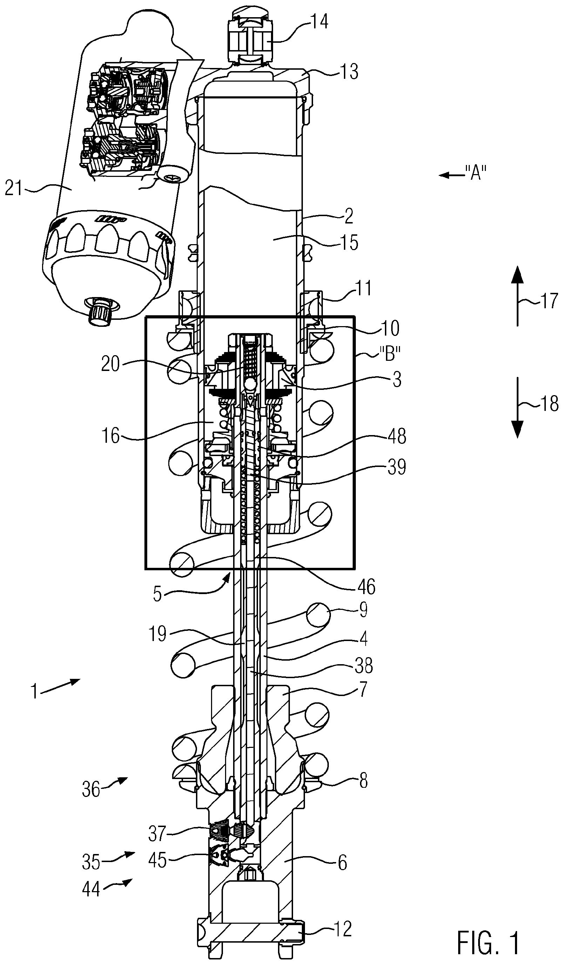

Fig. 1 der Zeichnung zeigt eine teilweise geschnittene Längsansicht eines Schwingungsdämpfers 1 gemäß einer Ausführungsform nach der vorliegenden Erfindung.

Der Schwingungsdämpfer 1 weist einen zur Aufnahme von Dämpfungsfluid ausgebildeten Zylinder 2 auf und einen darin axial beweglich angeordneten Arbeitskolben 3.

Der Arbeitskolben 3 ist dabei an einer Kolbenstange 4 festgelegt, welche sich über einen Durchlass 5, der mit einer nicht näher dargestellten Dichtungseinrichtung abgedichtet ist, aus dem Innenraum des Zylinders 2 heraus erstreckt.

Die Kolbenstange 4 erstreckt sich dabei in Richtung einer Aufnahme 6, an der die Kolbenstange 4 axial fest festgelegt ist und zwar über ein Dämpfungsbauteil 7.

Die Aufnahme 6 weist einen Bund 8 auf, an der sich eine Hauptfeder 9 abstützt, die sich an ihrem gegenüberliegenden Endbereich an einer mit einem Bund 10 versehenen Aufnahme 11 abstützt. Die Hauptfeder 9 ermöglicht eine Federbewegung eines an einer Aufnahme 12 abgestützten, aber nicht näher dargestellten Hinterrads eines Motorrads, bei dem es sich um ein Geländesportmotorrad handeln kann.

An dem der Aufnahme 6 gegenüberliegenden Endbereich des Schwingungsdämpfers 1 ist eine Aufnahme 13 angeordnet, welche den Zylinder 2 übergreift und eine weitere Aufnahme 14 aufweist, welche sich beispielsweise an einem Rahmenbauteil des nicht näher dargestellten Motorrads abstützen kann.

Der Arbeitskolben 3 trennt einen ersten Arbeitsraum 15 von einem zweiten Arbeitsraum 16, der genauso wie der Arbeitsraum 15 mit Dämpfungsfluid als Arbeitsmedium gefüllt ist. Der erste Arbeitsraum 15 dient als Druckstufe, die also dem Druckaufbau innerhalb des Arbeitsraums 15 bei einer Einfederbewegung des Schwingungsdämpfers 1 in Richtung des Pfeils 17 dient, während der zweite Arbeitsraum 16 als Zugstufe zum Druckaufbau bei einer Ausfederbewegung des Schwingungsdämpfers 1 in Richtung des Pfeils 18 dient.

Die Kolbenstange 4 weist einen Axialdurchlass 19 auf, ist also entlang ihrer Längserstreckung innen hohl ausgebildet und weist einen Fluidkommunikationsdurchlass 20 auf, durch den Dämpfungsfluid vom zweiten Arbeitsraum 16 in Richtung zum ersten Arbeitsraum 15 hindurch treten kann.

Der Schwingungsdämpfer 1 besitzt darüber hinaus einen Ausgleichsbehälter 21, der einen Innenraum 22 aufweist, in welchem sich eine Ausgleichskammer 23 angeordnet befindet und innerhalb einer am unteren Endbereich des Ausgleichsbehälter 21 angeordnete Gasfeder 24 vorgesehen ist.

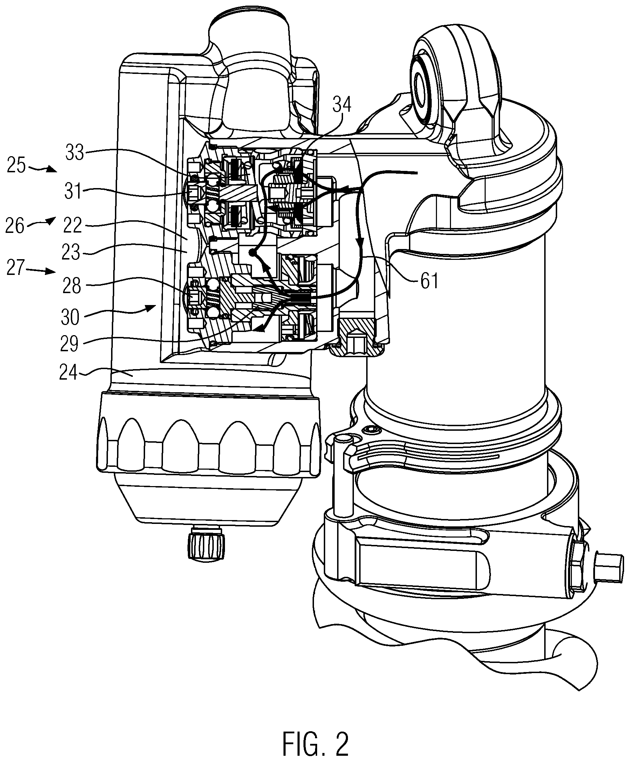

Wie es näher anhand von Fig. 2 ersichtlich ist, besitzt der Schwingungsdämpfer 1 eine erste Verstelleinrichtung 25 zur Einstellung der Druckstufendämpfung mit zwei Ventileinrichtungen 26 und 27, die für den Benutzer des Schwingungsdämpfers 1 von außen zugänglich sind.

Zu diesem Zweck weist die Ventileinrichtung 27 eine verlagerbare Ventilnadel 28 auf, deren Abstand zu einer Bohrung 29 über ein außenliegendes Stellelement 30 zur Veränderung der vom Arbeitsfluid durchströmbaren Querschnittsfläche verändert werden kann, sodass das Ansprechverhalten des Schwingungsdämpfers in der Druckstufe bei niedrigem Druckaufbau und damit einhergehender niedriger Verlagerungsgeschwindigkeit des Arbeitskolbens 3 eingestellt werden kann.

In hierzu ähnlicher Weise besitzt die erste Verstelleinrichtung 25 die vorstehend bereits erwähnte zweite Ventileinrichtung 26, mit der das Ansprechverhalten des Schwingungsdämpfers bei der Einfederbewegung mit hoher Verlagerungsgeschwindigkeit des Arbeitskolbens 3 eingestellt werden kann.

Hierzu besitzt die Ventileinrichtung 26 ein von außen zugängliches Stellelement 31, mit dem eine Federeinrichtung 33 einstellbar veränderlich beaufschlagt werden kann, die wiederum ein Federscheibenpaket 34 beaufschlagt, welches vom Arbeitsdruck des Dämpfungsfluids in dem ersten Arbeitsraum 15 beaufschlagt wird.

Stellt sich am Arbeitskolben 3 eine niedrige Verlagerungsgeschwindigkeit ein, so führt dies zu einem langsamen Druckanstieg in dem ersten Arbeitsraum 15 und einem niedrigen Massenstrom an Dämpfungsfluid durch die Ventileinrichtung 27 hindurch, während es bei einer Verlagerung des Arbeitskolbens 3 mit hoher Verlagerungsgeschwindigkeit zu einem sprunghaften Anstieg des Arbeitsdrucks in der Druckstufe, also dem ersten Arbeitsraum 15 kommt und sich ein hoher Massenstrom an Dämpfungsfluid einstellt, der das Federscheibenpaket 34 beaufschlagt, und somit eine Strömungsbahn für Dämpfungsfluid in Richtung der Ausgleichskammer 23 freigegeben wird.

Auf diese Weise können mit den beiden Ventileinrichtungen 26 und 27 unabhängig voneinander zwei Durchströmungsöffnungen für Arbeitsfluid eingestellt werden und somit auch das Dämpfungsverhalten des erfindungsgemäßen Schwingungsdämpfers 1 für den Fall der Einfederbewegung oder Kompressionsbewegung entsprechend den Wünschen des Benutzers für den Fall der niedrigen Verlagerungsgeschwindigkeit des Arbeitskolbens 3 und den Fall der hohen Verlagerungsgeschwindigkeit des Arbeitskolbens 3 unabhängig voneinander eingestellt werden.

Der Schwingungsdämpfer 1 besitzt eine zweite Verstelleinrichtung 35, die zur Einstellung des Ansprechverhaltens des Schwingungsdämpfers 1 bei der Ausfederbewegung vorgesehen ist.

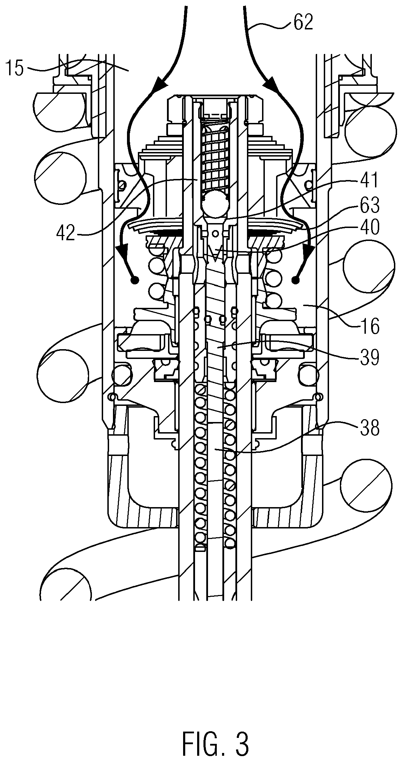

Die zweite Verstelleinrichtung 35 weist eine dritte Ventileinrichtung 36 auf, welche ein Stellelement 37 und eine näher noch anhand von Fig. 3 der Zeichnung ersichtliche Stellstange 38 aufweist. Über das von außen für den Benutzer zugängliche Stellelement 37 kann die Stellstange 38 in dem Axialdurchlass 19 der Kolbenstange 4 axial verschoben werden und zwar mittels einer Drehbewegung oder Schraubbewegung am Stellelement 37.

Diese Betätigung des Stellelements 37 führt zu der Axialverlagerung der Stellstange 38, welche an ihrem oberen Endbereich als V-förmige Einstellnadel 39 ausgebildet ist, d. h. also einstückig mit der Einstellnadel 39 ausgebildet ist. In Abwandlung zur einstückigen Ausbildung kann die Stellstange 38 auch getrennt von der V-förmigen Einstellnadel 39 ausgebildet sein, sodass die Stellstange 38 bei einer solchen Ausführungsform mit der zylinderförmig ausgebildeten V-förmigen Einstellnadel 39 zu deren Axialverlagerung in Anlage gebracht werden kann.

Wie dies anhand von Fig. 3 der Zeichnung ersichtlich ist, kann über die Axialverlagerung der Einstellnadel 39 der lichte Abstand zwischen dem V-förmigen Endabschnitt 40 und dem Endabschnitt 41 eines rohrstückförmig ausgebildeten Hülsenkörpers 42 eingestellt werden und auf diese Weise die erste Durchströmungsöffnung 43 der zweiten Verstelleinrichtung 35 eingestellt werden.

Die zweite Verstelleinrichtung 35 weist eine von der dritten Ventileinrichtung 36 getrennt einstellbare vierte Ventileinrichtung 44 auf, die zur Einstellung des Ansprechverhaltens des erfindungsgemäßen Schwingungsdämpfers 1 bei der Ausfederbewegung mit hoher Verlagerungsgeschwindigkeit des Arbeitskolbens 3 dient.

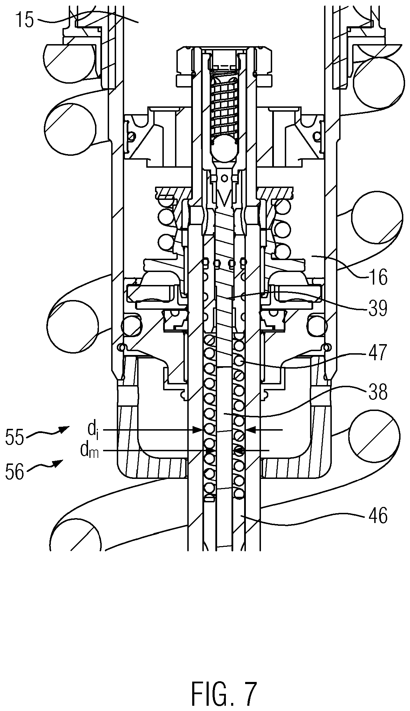

Die vierte Ventileinrichtung 44 besitzt ein für den Benutzer von außen zugängliches Stellelement 45, welches über eine Drehbewegung oder Verschraubbewegung eine näher anhand von Fig. 1 und Fig. 7 der Zeichnung ersichtliche hohlzylindrische Stellstange 46 axial verlagern kann und zwar innerhalb des Axialdurchlasses 19 der Kolbenstange 4.

Wie es näher anhand von Fig. 7 der Zeichnung ersichtlich ist, befindet sich am oberen Endbereich der hülsenförmigen Stellstange 46 eine Federeinrichtung in der Form einer Schraubendruckfeder 47 angeordnet, welche mittels der Axialverlagerung der Stellstange 46 beaufschlagt werden kann.

Die Federeinrichtung 47 liegt an ihrem der Stellstange 46 gegenüberliegenden Endbereich an der näher anhand von Fig. 1 und Fig. 7 der Zeichnung ersichtlichen Einstellnadel 48 an.

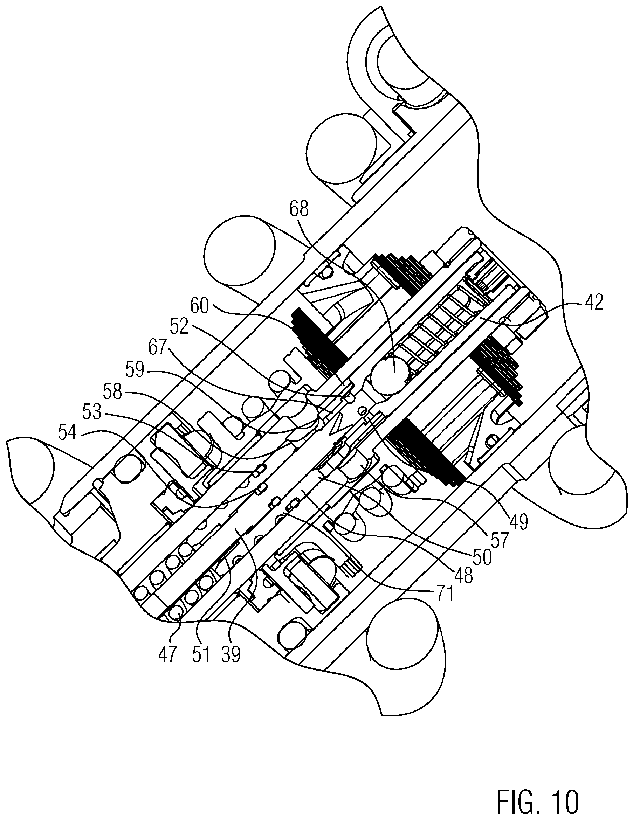

Mit der an einer Leichtlaufbuchse 71 des Axialdurchlasses 19 der Kolbenstange 4 vorgesehenen Einstellnadel 48 kann die näher anhand von Fig. 10 der Zeichnung ersichtliche zweite Durchströmungsöffnung 49 für die Zugstufe eingestellt werden, also vergrößert oder verkleinert werden.

Bei der Einstellnadel 48 handelt es sich um einen rohrstückförmigen Hülsenkörper 50, der die V-förmige Einstellnadel 39 aufnimmt und zwar in einer Innenausnehmung 51 des Hülsenkörpers 50.

Wie es ohne weiteres anhand von Fig. 10 der Zeichnung ersichtlich ist, besitzt der Hülsenkörper 42 am unteren Endabschnitt vier Querbohrungen 52, die die zweite Durchströmungsöffnung 49 ausbilden.

Über eine Axialverlagerung des Hülsenkörpers 50 können die Querbohrungen 52 verschlossen, teilweise freigegeben oder vollständig freigegeben werden.

Mit der Veränderung der durchströmbaren Flächen der zweiten Durchströmungsöffnung 49 kann das Ansprechverhalten des erfindungsgemäßen Schwingungsdämpfers auf eine Ausfederbewegung bei hoher Verlagerungsgeschwindigkeit des Arbeitskolbens 3 frei eingestellt werden.

Zu diesem Zweck nämlich kann über eine Betätigung des Stellelements 45 die Stellstange 46 axial verschoben werden, die ihrerseits die Federeinrichtung 47 beaufschlagt, an der sich die Einstellnadel 48 abstützt.

Fig. 10 der Zeichnung zeigt, dass die Einstellnadel 48 sowohl am Außenumfang als auch am Innenumfang Dichtungseinrichtungen in der Form von O-Ringen 53, 54 besitzt welche dafür sorgen, dass das in dem zweiten Arbeitsraum 16 befindliche Dämpfungsfluid nicht durch den Axialdurchlass 19 der Kolbenstange 4 entweicht und auch dafür sorgen, dass eine an der Einstellnadel 48 ausgebildete Differenzfläche 55 bei einem Druckaufbau in dem zweiten Arbeitsraum 16 dafür sorgt, dass die Einstellnadel 48 in Richtung einer Öffnungsbewegung der zweiten Durchströmungsöffnung 49 beaufschlagt wird.

Die Differenzfläche 55 wird, wie dies anhand von Fig. 7 der Zeichnung ersichtlich ist, von der Fläche 56 gebildet, die sich aus der Differenz zwischen dem Innendurchmesser des Axialdurchlasses 19 der Kolbenstange 4 und dem Außendurchmesser der Stellstange 38 ergibt.

Über die Querbohrung 57, die anhand von Fig. 10 der Zeichnung ersichtlich ist, setzt sich der in dem zweiten Arbeitsraum 16 ausgebildete Arbeitsdruck in Richtung auf den Hülsenkörper 50 fort und beaufschlagt dort die resultierende untere Ringfläche 58 und die obere resultierende Ringfläche 59, die aber aufgrund der sich verjüngenden Ausbildung des Hülsenkörpers 50 im Bereich des dem Hülsenkörper 42 zugeordneten Endabschnitts kleiner ist als die untere resultierende Ringfläche 58, was dazu führt, dass der Hülsenkörper 50 in Richtung zur Öffnungsbewegung der zweiten Durchströmungsöffnung 49 beaufschlagt wird.

Über die Drehbetätigung des Stellelements 45 und eine entsprechende Vorspannung der Federeinrichtung 47 sowie eine entsprechende Auswahl der Steifigkeit der Federeinrichtung 47 kann also das Öffnungsverhalten der vierten Ventileinrichtung 44 beeinflusst werden und damit das Ansprechverhalten des erfindungsgemäßen Schwingungsdämpfers 1 bei einer Ausfederbewegung des Schwingungsdämpfers 1.

Während Fig. 2 eine Strömungsbahn 61 des Arbeitsfluids bei einer Einfederbewegung des Schwingungsdämpfers 1 zeigt, zeigt Fig. 3 der Zeichnung eine Strömungsbahn 62 bei der Einfederbewegung vom ersten Arbeitsraum 15 in Richtung zum zweiten Arbeitsraum 16. Ein sich bei einer Einfederbewegung des Schwingungsdämpfers 1 im ersten Arbeitsraum 15 einstellendes hohes Druckniveau führt zu einer Öffnungsbewegung der Federscheibenpakete 63 und daher zur Ausbildung der Strömungsbahn 62.

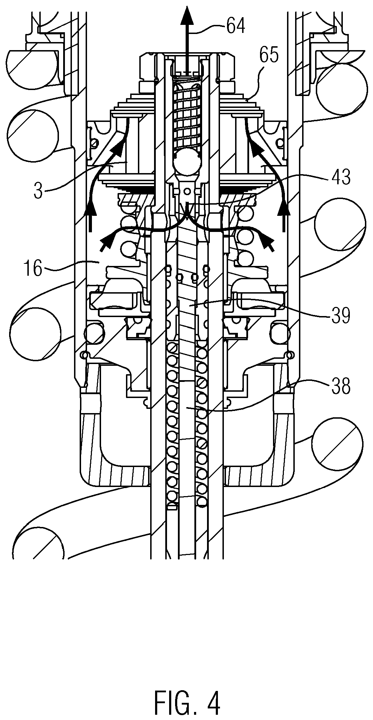

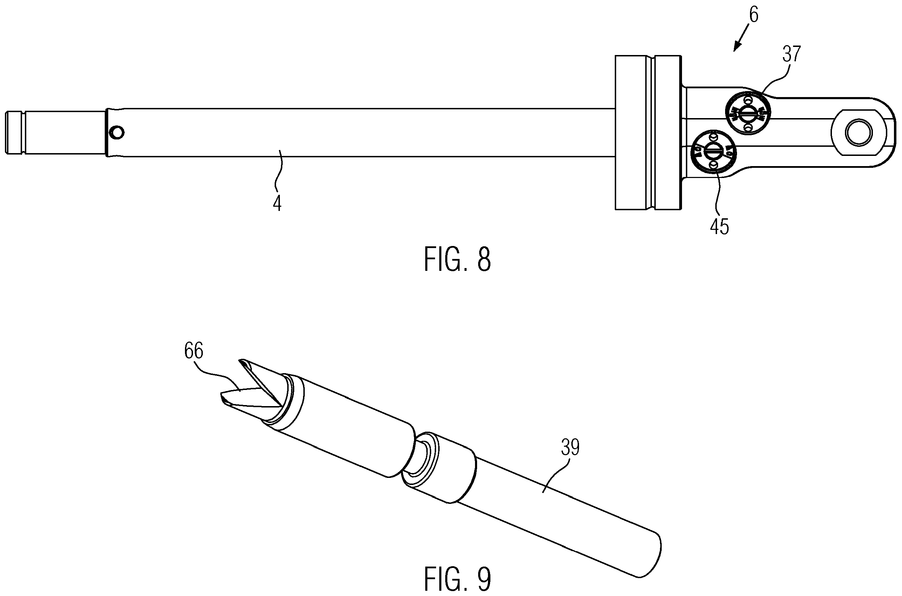

Fig. 4 der Zeichnung zeigt eine Strömungsbahn 64, die sich bei einer Ausfederbewegung des Schwingungsdämpfers 1 mit niedriger Verlagerungsgeschwindigkeit des Arbeitskolbens 3 einstellt. Der sich bei der Ausfederbewegung im zweiten Arbeitsraum 16 einstellende höhere Druck ist noch nicht ausreichend groß, um das Federscheibenpaket 65 öffnen zu können, es findet aber aufgrund des ansteigenden Drucks eine Fluidbewegung an Dämpfungsfluid über die erste Durchströmungsöffnung 43 statt, da die näher anhand von Fig. 9. Zeichnung ersichtliche V-förmige Ausnehmung 66 der Einstellnadel 39 aus dem unteren Endabschnitt 67 des Hülsenkörpers 42 hervor ragt und somit eine Strömung an Dämpfungsfluid möglich ist, da der Druck ausreichend ist, das Kugelventil 68 in Durchlassrichtung zu betätigen.

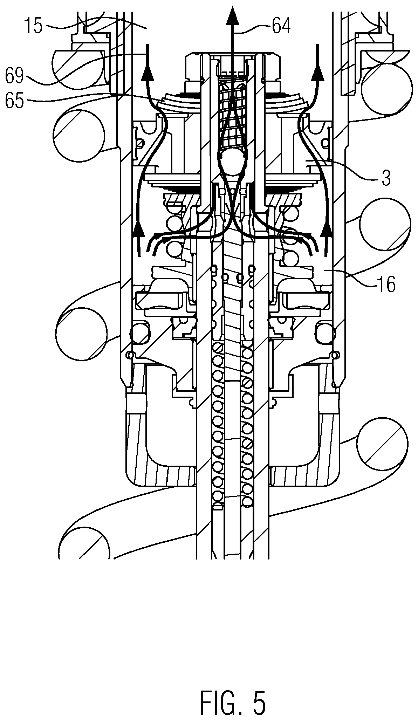

Steigt der Druck im zweiten Arbeitsraum 16 aufgrund einer Zunahme der Verlagerungsgeschwindigkeit des Arbeitskolbens 3 weiter an, so führt dies zu einer in Fig. 5 der Zeichnung dargestellten Übergangssituation, bei der sich eine Strömungsbahn 64 einstellt, die anhand von Fig. 4 der Zeichnung erläutert worden ist und zusätzlich der Druck ausreichend ist, um das Federscheibenpaket 65 zur Öffnungsbewegung zu betätigen, sodass sich eine weitere Strömung an Arbeitsfluid gemäß der Strömungsbahn 69 aus dem zweiten Arbeitsraum 16 in Richtung zum ersten Arbeitsraum 15 einstellt.

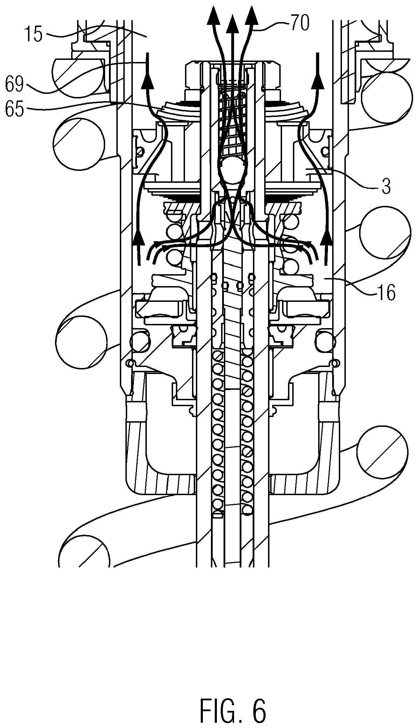

Wenn der Arbeitsdruck in dem zweiten Arbeitsraum 16 bei einem weiteren Anstieg der Verlagerungsgeschwindigkeit des Arbeitskolbens 3 weiter ansteigt, dann führt dies zur Ausbildung einer weiteren Strömungsbahn 70 an Arbeitsfluid, wie dies anhand von Fig. 6 der Zeichnung ersichtlich ist.

In diesem Fall nämlich steigt der Arbeitsdruck in dem zweiten Arbeitsraum 16 aufgrund einer hohen Verlagerungsgeschwindigkeit des Arbeitskolbens 3 soweit an, dass die näher anhand von Fig. 10 der Zeichnung ersichtliche Einstellnadel in der Form des Hülsenkörpers 50 in Richtung zur Öffnungsbewegung der zweiten Durchströmungsöffnung 49 beaufschlagt wird, die zweite Durchströmungsöffnung freigegeben wird und sich ein zusätzlicher Massenstrom an Dämpfungsfluid oder Arbeitsfluid aus dem zweiten Arbeitsraum 16 in Richtung zum ersten Arbeitsraum 15 einstellt, der durch die Strömungsbahn 70 symbolisiert wird.

Fig. 8 der Zeichnung zeigt die Kolbenstange 4 in einer schematischen Darstellung mit an der unteren Aufnahme 6 angeordneten Stellelementen 37 und 45 und macht deutlich, dass der Benutzer über eine Drehbetätigung der beiden Stellelemente das Ansprechverhalten des erfindungsgemäßen Schwingungsdämpfers bei der Ausfederbewegung getrennt für die beiden Fälle einer hohen Verlagerungsgeschwindigkeit des Arbeitskolbens und einer niedrigen Verlagerungsgeschwindigkeit des Arbeitskolbens einstellen kann und auf diese Weise eine seinen Anforderungen oder Wünschen entsprechende Veränderung des Ansprechverhaltens des Schwingungsdämpfers bei der Ausfederbewegung erzielen kann.

Mit der erfindungsgemäßen Ausbildung des Schwingungsdämpfers wird es daher ermöglicht, das Ansprechverhalten des Schwingungsdämpfers bei der Ausfederbewegung sowohl bei einer niedrigen Verlagerungsgeschwindigkeit des Arbeitskolbens als auch bei einer hohen Verlagerungsgeschwindigkeit des Arbeitskolbens unabhängig voneinander einzustellen, sodass es dem Benutzer möglich ist, das Ansprechverhalten des Schwingungsdämpfers nicht nur in der Druckstufe, also bei der Einfederbewegung feinfühlig einzustellen, sondern auch das Ansprechverhalten des Schwingungsdämpfers bei der Ausfederbewegung feinfühlig einzustellen, ohne dass es erforderlich ist, Umbaumaßnahmen am Schwingungsdämpfer vorzunehmen, wie beispielsweise einen Austausch des Federscheibenpakets für die Fluidströmung zwischen der Expansionskammer, also dem zweiten Arbeitsraum und der Druckkammer, also dem ersten Arbeitsraum.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

- 1.: Schwingungsdämpfer
- 2.: Zylinder
- 3.: Arbeitskolben
- 4.: Kolbenstange
- 5.: Durchlass
- 6.: Aufnahme
- 7.: Dämpfungsbauteil
- 8.: Bund
- 9.: Hauptfeder
- 10.: Bund
- 11.: Aufnahme
- 12.: Aufnahme
- 13.: Aufnahme
- 14.: Aufnahme
- 15.: Erster Arbeitsraum
- 16.: Zweiter Arbeitsraum
- 17.: Pfeil
- 18.: Pfeil
- 19.: Axialdurchlass
- 20.: Fluidkommunikationsdurchlass
- 21.: Ausgleichsbehälter
- 22.: Innenraum
- 23.: Ausgleichskammer
- 24.: Gasfeder
- 25.: Erste Verstelleinrichtung
- 26.: Ventileinrichtung
- 27.: Ventileinrichtung
- 28.: Ventilnadel
- 29.: Bohrung
- 30.: Stellelement
- 31.: Stellelement
- 32.: Federeinrichtung
- 33.: Federeinrichtung
- 34.: Federscheibenpaket
- 35.: Zweite Verstelleinrichtung
- 36.: Dritte Ventileinrichtung
- 37.: Stellelement
- 38.: Stellstange
- 39.: V-förmige Einstellnadel
- 40.: V-förmiger Endabschnitt
- 41.: Endabschnitt
- 42.: Hülsenkörper
- 43.: Erste Durchströmungsöffnung
- 44.: Vierte Ventileinrichtung
- 45.: Stellelement
- 46.: Stellstange
- 47.: Federeinrichtung
- 48.: Einstellnadel
- 49.: Zweite Durchströmungsöffnung
- 50.: Rohrstückförmiger Hülsenkörper
- 51.: Innenausnehmung
- 52.: Querbohrung
- 53.: O-Ring
- 54.: O-Ring
- 55.: Differenzfläche
- 56.: Fläche
- 57.: Querbohrung
- 58.: Untere Ringfläche
- 59.: Obere Ringfläche
- 60.: Endabschnitt
- 61.: Strömungsbahn
- 62.: Strömungsbahn
- 63.: Federscheibenpaket
- 64.: Strömungsbahn
- 65.: Federscheibenpaket
- 66.: V-förmige Ausnehmung
- 67.: Untere Endabschnitt
- 68.: Kugelventil
- 69.: Strömungsbahn
- 70.: Strömungsbahn
- 71.: Leichtlaufbuchse

## Patentansprüche

1. Schwingungsdämpfer (1) mit einem zur Aufnahme von Dämpfungsfluid ausgebildeten Zylinder (2) und einem darin axial beweglichen Arbeitskolben (3), der an einer mit einem Axialdurchlass (19) ausgebildeten Kolbenstange (4) geführt angeordnet ist und den Zylinderinnenraum in einen ersten (15) und einen zweiten (16) Arbeitsraum unterteilt und der Schwingungsdämpfer (1) einen die Kolbenstange (4) zumindest abschnittsweise axial durchsetzenden Fluidkommunikationsdurchlass (20) für eine Fluidströmung zumindest vom zweiten Arbeitsraum (16) zum ersten Arbeitsraum aufweist und eine erste Verstelleinrichtung (25) zur Einstellung der Druckstufendämpfung sowie eine zweite Verstelleinrichtung (35) zur Einstellung der Zugstufendämpfung aufweist und die erste Verstelleinrichtung (25) zwei zur Veränderung von Durchströmungsöffnungen für die Druckstufe einstellbare Ventileinrichtungen (26, 27) besitzt, und die zweite Verstelleinrichtung (35) eine im Axialdurchlass (19) der Kolbenstange (4) verschiebbar angeordnete Stellstange (38) zur Veränderung einer ersten Durchströmungsöffnung (43) einer dritten Ventileinrichtung (36) für die Zugstufe besitzt, und die zweite Verstelleinrichtung (35) eine von der dritten Ventileinrichtung (36) getrennt einstellbare vierte Ventileinrichtung (44) mit einer Einstellnadel (48) aufweist, die zur Axialverlagerung ausgebildet und zur Veränderung einer zweiten Durchströmungsöffnung (49) für die Zugstufe vorgesehen ist, wobei die Axialverlagerung der Einstellnadel (48) die zweite Durchströmungsöffnung (49) für Dämpfungsfluid vom zweiten Arbeitsraum (16) zum ersten Arbeitsraum (15) in Abhängigkeit vom Betrag der Axialverlagerung der Einstellnadel (48) veränderbar freigibt, J Z **dadurch gekennzeichnet, dass** die Einstellnadel (48) eine vom Druck des Dämpfungsfluids in dem zweiten Arbeitsraum (16) beaufschlagte Differenzfläche (55) aufweist derart, dass der Druck die Einstellnadel (48) zur Axialverlagerung der Einstellnadel (48) in Öffnungsrichtung der zweiten Durchströmungsöffnung (49) beaufschlägt.

2. Schwingungsdämpfer (1) nach einem der vorstehenden Ansprüche, **dadurch gekennzeichnet, dass** die Einstellnadel (48) ein hohlzylindrisch ausgebildeter Hülsenkörper (50) ist, der eine Innenausnehmung (51) zur Aufnahme der Stellstange (38) oder einer Einstellnadel (39) aufweist und sich mit einer den Hülsenkörper (50) in Schließstellung der zweiten Durchströmungsöffnung (49) beaufschlagenden Federeinrichtung (47) in Kontakt befindet.

3. Schwingungsdämpfer (1) nach einem der vorstehenden Ansprüche, **dadurch gekennzeichnet, dass** die Einstellnadel (48) an einem mit einer Leichtlaufbuchse (71) versehenen Bereich des Axialdurchlasses (19) der Kolbenstange (4) angeordnet ist und am Außenumfang und am Innenumfang der Einstellnadel (48) jeweils eine Dichtungseinrichtung (53, 54) angeordnet ist.

4. Schwingungsdämpfer (1) nach einem der vorstehenden Ansprüche, **dadurch gekennzeichnet, dass** die Einstellnadel (48) mit einem sich vom Außenumfang in Richtung zum Innenumfang verlaufenden Durchlass (57) für Dämpfungsfluid versehen ist.

5. Schwingungsdämpfer (1) nach einem der vorstehenden Ansprüche, **gekennzeichnet durch** eine in dem Axialdurchlass (19) der Kolbenstange (4) angeordnete, hohlzylindrisch ausgebildete Stellstange (46), die mittels eines mit der Stellstange (46) in Wirkeingriff bringbaren Stellelements (45) zur Veränderung der zweiten Durchströmungsöffnung (49) für die Zugstufe axial verlagerbar ausgebildet.

6. Schwingungsdämpfer (1) nach einem der vorstehenden Ansprüche **dadurch gekennzeichnet, dass** die zweite Verstelleinrichtung (35) eine relativ zur Kolbenstange axial verlagerbare, zylinderförmig ausgebildete Einstellnadel (39) aufweist, deren Axialverlagerung die erste Durchströmungsöffnung (43) für Dämpfungsfluid vom zweiten Arbeitsraum (16) zum ersten Arbeitsraum (15) in Abhängigkeit von dem Betrag der Axialverlagerung der Einstellnadel (39) veränderbar freigibt.

7. Schwingungsdämpfer (1) nach Anspruch 6, **dadurch gekennzeichnet, dass** die Einstellnadel (39) mit der Stellstange (38) in Anlage bringbar ausgebildet ist und mittels einer Axialverlagerung der Stellstange (38) die erste Durchströmungsöffnung (43) veränderbar freigebbar ist.

8. Schwingungsdämpfer (1) nach Anspruch 6 oder 7, **dadurch gekennzeichnet, dass** die Einstellnadel (39) an einem stirnseitigen Endabschnitt eine V-förmig ausgebildete Ausnehmung (66) aufweist und sich der stirnseitige Endabschnitt in eine komplementär zur Konfiguration des Endabschnitts ausgebildete Ausnehmung eines rohrstückförmig ausgebildeten Hülsenkörpers (42) erstreckt und sich der Endabschnitt an der Innenwand der Ausnehmung (67) abstützt.

9. Schwingungsdämpfer nach einem der vorstehenden Ansprüche, **gekennzeichnet durch** ein Stellelement (37), welches mit der Stellstange (38) zur Veränderung der ersten Durchströmungsöffnung (43) für die Zugstufe in Wirkeingriff bringbar ist.

10. Schwingungsdämpfer (1) nach Anspruch 8 oder 9, **dadurch gekennzeichnet, dass** die Einstellnadel (39) relativ zum Hülsenkörper (42) derart angeordnet ist, dass eine Axialverlagerung der Einstellnadel (39) mindestens einen Teilbereich der V-förmig ausgebildeten Ausnehmung (66) zum Durchtritt von Dämpfungsfluid aus dem zweiten Arbeitsraum (16) zum ersten (15) Arbeitsraum freigibt.

11. Schwingungsdämpfer (1) nach einem der vorstehenden Ansprüche, **dadurch gekennzeichnet, dass** die beiden Ventileinrichtungen (26, 27) der ersten Verstelleinrichtung (25) zur Veränderung eines ersten, niedrigeren Massenstroms an Dämpfungsfluid und eines zweiten, höheren Massenstroms an Dämpfungsfluid aus dem ersten Arbeitsraum (15) in Richtung zu einer Ausgleichskammer (23) für die Aufnahme von Dämpfungsfluid ausgebildet sind.

12. Schwingungsdämpfer (1) nach Anspruch 11, **dadurch gekennzeichnet, dass** die Ventileinrichtung (27) zur Veränderung des ersten Massenstroms eine relativ zu einer für den Durchtritt von Dämpfungsfluid in der Form des niedrigeren Massenstroms vorgesehene Bohrung (29) verlagerbare Ventilnadel (28) besitzt und die Ventileinrichtung (26) zur Veränderung des zweiten Massenstroms eine von einer Federeinrichtung (33) mit veränderbarer Vorspannung beaufschlagbare Federscheibenanordnung (34) besitzt.

13. Schwingungsdämpfer (1) nach einem der vorstehenden Ansprüche, **dadurch gekennzeichnet, dass** der Arbeitskolben (3) mit mindestens einem Durchlass (72) zum Durchtritt von Dämpfungsfluid zwischen dem ersten (15) und zweiten (16) Arbeitsraum ausgebildet ist und mit Ventileinrichtungen insbesondere in der Form von Federscheiben (65) zur wahlweisen Freigabe des Durchtritts von Dämpfungsfluid versehen ist.

14. Schwingungsdämpfer (1) nach einem der vorstehenden Ansprüche, **gekennzeichnet durch** eine Gasfeder (24) zur Druckbeaufschlagung des Dämpfungsfluids des Schwingungsdämpfers (1).

## Claims

1. A vibration damper (1) comprising a cylinder (2) adapted to receive damping fluid and a working piston (3) axially movable therein, which is arranged to be guided on a piston rod (4) formed with an axial aperture (19) and divides the cylinder interior into a first (15) and a second (16) working space, and the vibration damper (1) includes a fluid communication aperture (20) at least sectionally extending through the piston rod (4) for a fluid flow at least from the second working space (16) to the first working space, and includes a first adjusting device (25) for adjusting the compression stage damping and a second adjusting device (35) for adjusting the rebound stage damping, and the first adjusting device (25) includes two valve devices (26, 27) for changing throughflow openings for the compression stage, and the second adjusting device (35) has an adjusting rod (38) shiftably arranged in the axial aperture (19) of the piston rod (4) for changing a first throughflow opening (43) of a third valve device (36) for the rebound stage, and the second adjusting device (35) includes a fourth valve device (44) adjustable separately from the third valve device (36), which comprises an adjusting needle (48) that is configured for an axial displacement and is provided for changing a second throughflow opening (49) for the rebound stage, wherein the axial displacement of the adjusting needle (48) variably clears the second throughflow opening (49) for damping fluid from the second working space (16) to the first working space (15) in dependence on the amount of axial displacement of the adjusting needle (48), **characterized in in that** the adjusting needle (48) has a differential surface (55) acted upon by the pressure of the damping fluid in the second working space (16) in such a way that the pressure acts on the adjusting needle (48) for an axial displacement of the adjusting needle (48) in the opening direction of the second throughflow opening (49).

2. The vibration damper (1) according to any of the preceding claims, **characterized in that** the adjusting needle (48) is a sleeve body (50) of hollow-cylindrical shape, which includes an inner recess (51) for receiving the adjusting rod (38) or an adjusting needle (39) and is in contact with a spring device (47) acting on the sleeve body (50) in the closed position of the second throughflow opening (49).

3. The vibration damper (1) according to any of the preceding claims, **characterized in that** the adjusting needle (48) is arranged on an area of the axial aperture (19) of the piston rod (4) provided with a low-friction bushing (71), and a sealing device (53, 54) is arranged on the outer circumference and on the inner circumference of the adjusting needle (48), respectively.

4. The vibration damper (1) according to any of the preceding claims, **characterized in that** the adjusting needle (48) is provided with an aperture (57) for damping fluid, which extends from the outer circumference towards the inner circumference.

5. The vibration damper (1) according to any of the preceding claims, **characterized by** a hollow-cylindrical adjusting rod (46) arranged in the axial aperture (19) of the piston rod (4), which is designed to be axially displaceable by means of an adjusting element (45) that can be brought into operative engagement with the adjusting rod (46) in order to change the second throughflow opening (49) for the rebound stage.

6. The vibration damper (1) according to any of the preceding claims, **characterized in that** the second adjusting device (35) includes a cylindrical adjusting needle (39) axially displaceable relative to the piston rod, whose axial displacement variably clears the first throughflow opening (43) for damping fluid from the second working space (16) to the first working space (15) in dependence on the amount of axial displacement of the adjusting needle (39).

7. The vibration damper (1) according to claim 6, **characterized in that** the adjusting needle (39) is configured to be brought into contact with the adjusting rod (38), and the first throughflow opening (43) can be variably cleared by means of an axial displacement of the adjusting rod (38).

8. The vibration damper (1) according to claim 6 or 7, **characterized in that** the adjusting needle (39) has a V-shaped recess (66) at a front end portion, and the front end portion extends into a recess of a sleeve body (42) configured in the form of a tubular piece, which recess is complementary to the configuration of the end portion, and the end portion is supported on the inner wall of the recess (67).

9. The vibration damper according to any of the preceding claims, **characterized by** an adjusting element (37) which can be brought into operative engagement with the adjusting rod (38) for changing the first throughflow opening (43) for the rebound stage.

10. The vibration damper (1) according to claim 8 or 9, **characterized in that** the adjusting needle (39) is arranged relative to the sleeve body (42) in such a way that an axial displacement of the adjusting needle (39) clears at least a partial region of the V-shaped recess (66) for the passage of damping fluid from the second working space (16) to the first working space (15).

11. The vibration damper (1) according to any of the preceding claims, **characterized in that** the two valve devices (26, 27) of the first adjusting device (25) are configured to vary a first, lower mass flow of damping fluid and a second, higher mass flow of damping fluid from the first working space (15) towards a compensation chamber (23) for receiving damping fluid.

12. The vibration damper (1) according to claim 11, **characterized in that** the valve device (27) for varying the first mass flow has a valve needle (28) displaceable relative to a bore (29) provided for the passage of damping fluid in the form of the lower mass flow, and the valve device (26) for varying the second mass flow has a spring washer assembly (34) which can be acted upon by a spring device (33) of variable pretension.

13. The vibration damper (1) according to any of the preceding claims, **characterized in that** the working piston (3) is configured with at least one aperture (72) for the passage of damping fluid between the first (15) and second (16) working spaces and is provided with valve devices, in particular in the form of spring washers (65), for selectively enabling the passage of damping fluid.

14. The vibration damper (1) according to any of the preceding claims, **characterized by** a gas spring (24) for pressurizing the damping fluid of the vibration damper (1).

## Revendications

1. Amortisseur de vibrations (1) comportant un cylindre (2) conçu pour recevoir un fluide d'amortissement et un piston de travail (3) mobile axialement dans celui-ci, qui est disposé de manière guidée sur une tige de piston (4) formée avec un orifice axial (19) et divise l'intérieur du cylindre en un premier (15) et un deuxième (16) espace de travail, et l'amortisseur de vibrations (1) présente un orifice de communication de fluide (20) traversant la tige de piston (4) axialement au moins par sections, pour un écoulement de fluide au moins du deuxième espace de travail (16) vers le premier espace de travail et comprend un premier dispositif d'ajustement (25) pour régler l'amortissement de la compression et un deuxième dispositif d'ajustement (35) pour régler l'amortissement de la détente, et le premier dispositif d'ajustement (25) présente deux dispositifs de soupape (26, 27) pour varier les ouvertures d'écoulement pour la compression, et le deuxième dispositif d'ajustement (35) présente une tige d'ajustement (38) disposée de manière coulissante dans l'orifice axial (19) de la tige de piston (4) pour modifier une première ouverture d'écoulement (43) d'un troisième dispositif de soupape (36) pour la détente, et le deuxième dispositif d'ajustement (35) comprend un quatrième dispositif de soupape (44) à régler séparément du troisième dispositif de soupape (36) avec une aiguille de réglage (48), qui est conçue pour un déplacement axial et est prévue pour modifier une deuxième ouverture d'écoulement (49) pour la détente, dans lequel le déplacement axial de l'aiguille de réglage (48) libère de manière variable la deuxième ouverture d'écoulement (49) pour le fluide d'amortissement du deuxième espace de travail (16) vers le premier espace de travail (15) en dépendence de la quantité du déplacement axial de l'aiguille de réglage (48), **caractérisé en ce que** l'aiguille de réglage (48) présente une surface différentielle (55) sur laquelle agit la pression du fluide d'amortissement dans le deuxième espace de travail (16) de telle sorte que la pression agit sur l'aiguille de réglage (48) pour le déplacement axial de l'aiguille de réglage (48) dans le sens de l'ouverture de la deuxième ouverture d'écoulement (49).

2. Amortisseur de vibrations (1) selon l'une quelconque des revendications précédentes, **caractérisé en ce que** l'aiguille de réglage (48) est un corps de manchon (50) de forme cylindrique creuse, qui présente un évidement interne (51) pour recevoir la tige d'ajustement (38) ou une aiguille de réglage (39), et qui est en contact avec un dispositif à ressort (47) agissant sur le corps de manchon (50) dans la position fermée de la deuxième ouverture d'écoulement (49).

3. Amortisseur de vibrations (1) selon l'une quelconque des revendications précédentes, **caractérisé en ce que** l'aiguille de réglage (48) est disposée sur une zone de l'orifice axial (19) de la tige de piston (4) munie d'une douille de faible friction (71), et un dispositif d'étanchéité (53, 54) est disposé sur la circonférence extérieure et sur la circonférence intérieure de l'aiguille de réglage (48), respectivement.

4. Amortisseur de vibrations (1) selon l'une quelconque des revendications précédentes, **caractérisé en ce que** l'aiguille de réglage (48) est munie d'un orifice (57) pour le fluide d'amortissement s'étendant de la circonférence extérieure vers la circonférence intérieure.

5. Amortisseur de vibrations (1) selon l'une quelconque des revendications précédentes, **caractérisé par** une tige d'ajustement (46) de forme cylindrique creuse, disposée dans l'orifice axial (19) de la tige de piston (4), qui est conçue de manière à pouvoir être déplacée axialement au moyen d'un élément d'ajustement (45) pouvant être amené en prise fonctionnelle avec la tige d'ajustement (46), afin de modifier la deuxième ouverture d'écoulement (49) pour la détente.

6. Amortisseur de vibrations (1) selon l'une quelconque des revendications précédentes, **caractérisé en ce que** le deuxième dispositif d'ajustement (35) présente une aiguille de réglage cylindrique (39) qui est déplaçable axialement par rapport à la tige de piston et dont le déplacement axial ouvre de manière variable la première ouverture d'écoulement (43) pour le fluide d'amortissement du deuxième espace de travail (16) vers le premier espace de travail (15) en dépendence de la quantité de déplacement axial de l'aiguille de réglage (39).

7. Amortisseur de vibrations (1) selon la revendication 6, **caractérisé en ce que** l'aiguille de réglage (39) est conçue de manière à être mise en contact avec la tige d'ajustement (38) et que la première ouverture d'écoulement (43) peut être libérée de manière variable au moyen d'un déplacement axial de la tige d'ajustement (38).

8. Amortisseur de vibrations (1) selon la revendication 6 ou 7, **caractérisé en ce que** l'aiguille de réglage (39) présente un évidement en forme de V (66) à une partie d'extrémité avant et la partie d'extrémité avant s'étend dans un évidement d'un corps de manchon (42) conçu en forme d'une pièce tubulaire, lequel évidement est complémentaire de la configuration de la partie d'extrémité, et la partie d'extrémité est supportée sur la paroi intérieure de l'évidement (67).

9. Amortisseur de vibrations selon l'une quelconque des revendications précédentes, **caractérisé par** un élément de réglage (37) qui peut être mis en prise fonctionnelle avec la tige de réglage (38) pour modifier le premier orifice d'écoulement (43) pour la détente.

10. Amortisseur de vibrations (1) selon la revendication 8 ou 9, **caractérisé en ce que** l'aiguille de réglage (39) est disposée par rapport au corps de manchon (42) de telle sorte qu'un déplacement axial de l'aiguille de réglage (39) libère au moins une zone partielle de l'évidement en forme de V (66) pour le passage du fluide d'amortissement du deuxième espace de travail (16) vers le premier espace de travail (15).

11. Amortisseur de vibrations (1) selon l'une quelconque des revendications précédentes, **caractérisé en ce que** les deux dispositifs de soupape (26, 27) du premier dispositif d'ajustement (25) sont conçus pour modifier un premier débit massique plus faible de fluide d'amortissement et un deuxième débit massique plus élevé de fluide d'amortissement du premier espace de travail (15) vers une chambre de compensation (23) destinée à recevoir le fluide d'amortissement.

12. Amortisseur de vibrations (1) selon la revendication 11, **caractérisé en ce que** le dispositif de soupape (27) destiné à modifier le premier débit massique présente un pointeau de soupape (28) qui peut être déplacé par rapport à un alésage (29) prévu pour le passage d'un fluide d'amortissement sous la forme du débit massique inférieur, et le dispositif de soupape (26) destiné à modifier le deuxième débit massique présente un agencement de disque à ressort (34) qui peut être sollicité par un dispositif à ressort (33) avec une prétension variable.

13. Amortisseur de vibrations (1) selon l'une quelconque des revendications précédentes, **caractérisé en ce que** le piston de travail (3) est formé avec au moins un orifice (72) pour le passage de fluide d'amortissement entre les première (15) et deuxième (16) espaces de travail et est muni de dispositifs de soupape, en particulier sous la forme de rondelles élastiques (65), pour permettre sélectivement le passage de fluide d'amortissement.

14. Amortisseur de vibrations (1) selon l'une quelconque des revendications précédentes, **caractérisé par** un ressort à gaz (24) pour mettre sous pression le fluide d'amortissement de l'amortisseur de vibrations (1).
